# EUROPÄISCHE PATENTANMELDUNG

(11) **EP 2 521 240 A2**
(43) Veröffentlichungstag der Anmeldung: **07.11.2012**
(21) Anmeldenummer: 11188157.9
(22) Anmeldetag: 08.11.2011
(51) Int. Cl.: H02J 3/38

(54) **Elektrische Schaltung für einen Windpark**

(30) Priorität: 01.02.2011 DE 102011003459
(71) Anmelder: Alstom Grid GmbH, 01099 Dresden (DE)
(72) Erfinder: Dr. Hentschel, Gert, 01109 Dresden (DE); Prinz, Steffen, 07743 Jena (DE)
(74) Vertreter: Dreiss

(57) **Zusammenfassung**

Es wird eine elektrische Schaltung (10) für einen Windpark beschrieben. Die elektrische Schaltung (10) weist ein erstes Netz (16) auf, mit dem mindestens ein von einer Windenergieanlage (11) angetriebener WEA-Generator (13) gekoppelt ist, und mit dem mindestens ein von einer Brennkraftmaschine (22) angetriebener Maschinengenerator (23) gekoppelt ist. Wenn der WEA-Generator (13) im Wesentlichen keine elektrische Energie liefert, dann kann die magnetische Erregung des laufenden Maschinengenerators (23) ausgehend von Null erhöht werden.

## Beschreibung

Die Erfindung betrifft eine elektrische Schaltung für einen Windpark sowie ein Verfahren zu deren Betrieb.

In einem Windpark ist eine Mehrzahl von Windenergieanlagen über zugehörige Generatoren an ein erstes Netz angeschlossen. Weiterhin ist üblicherweise auch ein von einem Dieselaggregat angetriebener Maschinengenerator vorhanden, der zur Deckung des sogenannten Eigenbedarfs des Windparks vorgesehen ist, wenn die Windenergieanlagen im Wesentlichen keine elektrische Energie erzeugen und auch ansonsten keine Energieversorgung des Windparks zum Beispiel von einem landgebundenen Energieversorgungsnetz mehr vorhanden ist. Bei dem genannten Eigenbedarf handelt es sich um diejenige elektrische Energie, die erforderlich ist, um den Windpark zu betreiben.

Es ist bekannt, dass der Aufbau einer Spannung auf dem ersten Netz zu Lastsprüngen führen kann, beispielsweise beim Einschalten bzw. Hochfahren des Maschinengenerators. Ebenfalls ist bekannt, dass derartige Lastsprünge unerwünschte Auswirkungen auf die Spannung in dem ersten Netz haben können, insbesondere können derartige Lastsprünge zu unerwünschten Spannungseinbrüchen oder gar zum Ausfall des ersten Netzes führen.

Aufgabe der Erfindung ist es, den Eigenbedarf des Windparks zu gewährleisten, ohne dass hierbei die genannten unerwünschten Auswirkungen auftreten.

Die Aufgabe wird erfindungsgemäß durch ein Verfahren nach dem Anspruch 1 sowie durch eine elektrische Schaltung nach dem Anspruch 6 gelöst.

Die Erfindung weist ein erstes Netz auf, mit dem mindestens ein von einer Windenergieanlage angetriebener WEA-Generator gekoppelt ist, und mit dem mindestens ein von einer Brennkraftmaschine angetriebener Maschinengenerator gekoppelt ist. Wenn der WEA-Generator im Wesentlichen keine elektrische Energie liefert, dann wird die magnetische Erregung des laufenden Maschinengenerators ausgehend von Null erhöht.

Durch die von Null ausgehende Erhöhung der magnetischen Erregung des Maschinengenerators wird erreicht, dass beim Hochfahren des Maschinengenerators im Wesentlichen kein großer Lastsprung entsteht. Die unerwünschten Auswirkungen eines derartigen Lastsprungs auf das erste Netz werden somit erfindungsgemäß vermieden.

Bei einer Ausgestaltung der Erfindung werden vor der Erhöhung der magnetischen Erregung das WEA-Netz, der WEA-Generator und der Maschinengenerator in einem spannungslosen Zustand zusammengeschaltet. Damit wird erreicht, dass die erfindungsgemäße, von Null ausgehende Erhöhung der magnetischen Erregung auf der Grundlage eines spannungslosen Zustands erfolgt und somit die erfindungsgemäße Vermeidung eines Lastsprungs sicher erreicht wird.

Bei einer Weiterbildung der Erfindung wird die erhöhte magnetische Erregung des Maschinengenerators im Wesentlichen sprungförmig abgeschaltet. Das sprungartige Abschalten wirkt sich günstig auf die Remanenz der angeschlossenen Transformatoren aus. Damit wird erreicht, dass nach einer Außerbetriebnahme des ersten Netzes nur eine geringe Remanenz in den Transformatoren verbleibt.

Weitere Merkmale, Anwendungsmöglichkeiten und Vorteile der Erfindung ergeben sich aus der nachfolgenden Beschreibung von Ausführungsbeispielen der Erfindung, die in zwei Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

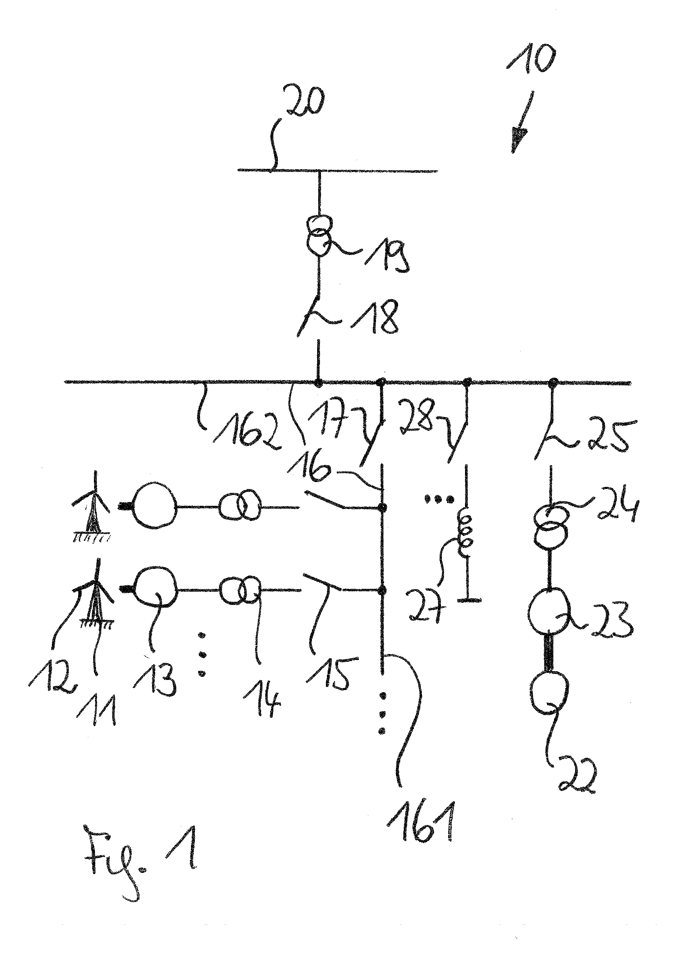

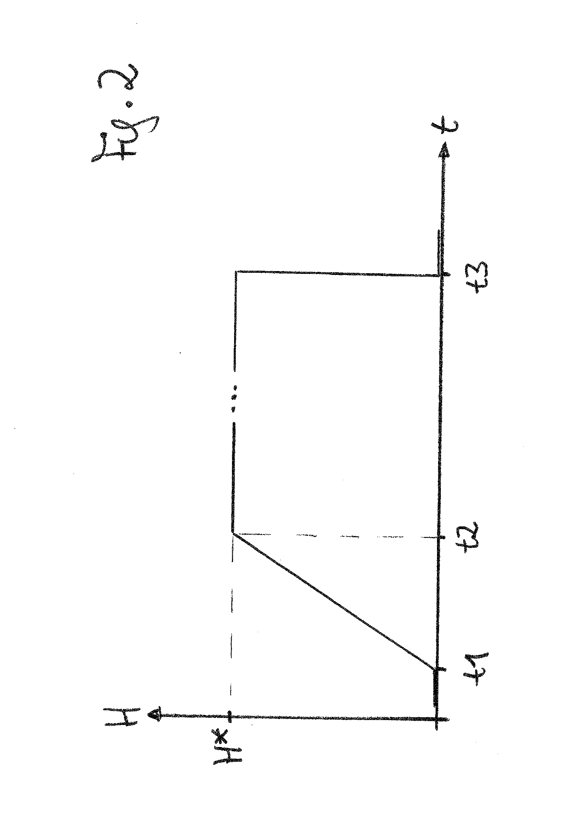

Figur 1 zeigt ein schematisches Blockschaltbild eines Ausführungsbeispiels einer erfindungsgemäßen elektrischen Schaltung und Figur 2 zeigt ein schematisches Zeitdiagramm der magnetischen Erregung eines Generators der elektrischen Schaltung der Figur 1.

In der Figur 1 ist eine elektrische Schaltung 10 eines sogenannten Offshore-Windparks dargestellt, also einer auf See befindlichen, räumlichen Ansammlung einer Mehrzahl von Windenergieanlagen (Windenergieanlage = WEA).

In der Figur 1 sind beispielhaft zwei Windenergieanlagen 11 gezeigt, die jeweils dazu vorgesehen sind, die Bewegungsenergie des Windes in elektrische Energie umzuwandeln. Hierzu weist jede der üblicherweise auf seegebundenen Plattformen aufgebauten Windenergieanlagen 11 jeweils ein Windrad 12 auf, das mit einem elektrischen WEA-Generator 13 mechanisch gekoppelt ist und diesen antreibt.

Die von den WEA-Generatoren 13 erzeugte elektrische Energie wird über jeweils einen WEA-Transformator 14 und über jeweils einen WEA-Schalter 15 in eine erste Sammelschiene 161 eines WEA-Netzes 16 eingespeist. Bei dem WEA-Netz 16 kann es sich beispielsweise um ein Mittelspannungsdrehstromnetz von 33 kV handeln. Das WEA-Netz 16 ist dabei im Wesentlichen für alle seegebundenen Einrichtungen des Windparks vorgesehen und befindet sich damit im Wesentlichen auf See. Das WEA-Netz 16 wird auch als erstes Netz bezeichnet.

Die erste Sammelschiene 161 des WEA-Netzes ist über einen Sammelschienen-Schalter 17 mit einer zweiten Sammelschiene 162 des WEA-Netzes 16 verbunden.

Die zweite Sammelschiene 162 des WEA-Netzes 16 ist über einen Hauptschalter 18 und einen Haupttransformator 19 mit einem Übertragungsnetz 20 verbunden, beispielsweise mit einem Hochspannungsdrehstromnetz von 155 kV. Das Übertragungsnetz 20 ist im Wesentlichen dazu vorgesehen, die innerhalb des Windparks erzeugte elektrische Energie auf das Festland zu übertragen. Im Rahmen des Übertragungsnetzes 20 kann auch alternativ oder zusätzlich eine Gleichspannungsübertragung vorhanden sein. Das Übertragungsnetz 20 wird auch als zweites Netz bezeichnet. Das Übertragungsnetz 20 ist mit einem nicht-dargestellten Land-Netz verbunden, bei dem es sich beispielsweise um ein auf dem Festland befindliches Energieversorgungsnetz eines Energieversorgungsunternehmens handelt, über das Industrieanlagen und Haushalte mit elektrischer Energie versorgt werden.

Auf einer Plattform einer der Windenergieanlagen 11 oder auf einer sonstigen seegebundenen Plattform des Windparks ist eine Brennkraftmaschine 22 vorhanden, beispielsweise eine Diesel-Brennkraftmaschine. Es versteht sich, dass anstelle der Brennkraftmaschine 22 auch jegliches anderes, nicht-elektrisches Aggregat vorhanden sein kann, das dazu geeignet ist, einen Generator in eine Drehbewegung zu versetzen.

Über eine mechanische Kopplung treibt die Brennkraftmaschine 22 einen Maschinengenerator 23 an, der über einen Maschinentransformator 24 und einen Maschinenschalter 25 mit der zweiten Sammelschiene 162 des WEA-Netzes 16 verbunden ist. Es versteht sich, dass auch mehrere Brennkraftmaschinen 22 und/oder mehrere Maschinengeneratoren 23 und/oder mehrere Maschinentransformatoren 24 und/oder mehrere Maschinenschalter 25 vorhanden sein können, die parallel oder in Serie geschaltet sein können.

Weiterhin sind auf mindestens einer Plattform einer der Windenergieanlagen 11 oder auf mindestens einer sonstigen seegebundenen Plattform des Windparks eine oder mehrere Drosseln 27 vorhanden, die über Drosselschalter 28 mit der zweiten Sammelschiene 162 des WEA-Netzes 16 verbunden sind. Die eine oder die mehreren Drosseln 27 dienen der Kompensation der Ladeleistung des WEA-Netzes 16.

Die einzelnen Plattformen der Windenergieanlagen 11 sowie die gegebenenfalls vorhandenen, sonstigen Plattformen des Windparks müssen für ihren Betrieb mit elektrischer Energie versorgt werden. Dies wird auch als sogenannter Eigenbedarf des Windparks bezeichnet. Dieser Eigenbedarf wird üblicherweise von dem WEA-Netz 16 mit Hilfe der elektrische Energie liefernden Windenergieanlagen 11 befriedigt.

Der Eigenbedarf muss aber im Wesentlichen immer gewährleistet sein, also auch dann, wenn zum Beispiel während eines Sturms die Windenergieanlagen 11 abgeschaltet sind und die WEA-Generatoren 13 damit im Wesentlichen keine elektrische Energie an das WEA-Netz 16 mehr liefern. In diesem Fall wird bei der elektrischen Schaltung 10 der Eigenbedarf des Windparks dadurch befriedigt, dass das WEA-Netz 16 über das Übertragungsnetz 20 mit dem Land-Netz verbunden ist und damit das WEA-Netz 16 von dem Land-Netz mit elektrischer Energie versorgt wird. So kann bei der elektrischen Schaltung 10 auch bei abgeschalteten Windenergieanlagen 11 der Eigenbedarf des Windparks im Wesentlichen immer über das Übertragungsnetz 20 aus dem Land-Netz gewährleistet werden.

Nur im Falle einer Unterbrechung der Verbindung von dem WEA-Netz 16 zu dem Land-Netz, also beispielsweise im Falle einer Unterbrechung des Übertragungsnetzes 20, ist der Eigenbedarf des Windparks nicht gewährleistet. Für diesen Fall ist jedoch die Brennkraftmaschine 22 mit dem Maschinengenerator 23 und dem Maschinentransformator 25 vorgesehen.

Wird also bei abgeschalteten Windenergieanlagen 11 festgestellt, dass über das Übertragungsnetz 20 keine elektrische Energie mehr von dem Land-Netz zu dem WEA-Netz 16 übertragen werden kann, so wird der Eigenbedarf des Windparks gemäß der nachfolgenden, unter anderem anhand der Figur 2 erläuterten Vorgehensweise gedeckt.

Dabei wird davon ausgegangen, dass das WEA-Netz 16 spannungslos ist, da, wie vorstehend erläutert, von Seiten des Land-Netzes keine Einspeisung mehr in das WEA-Netz 16 vorhanden ist, und da, wie ebenfalls vorstehend erläutert, die Windenergieanlagen 11 abgeschaltet sind und somit auch von dieser Seite keine Einspeisung mehr in das WEA-Netz 16 erfolgt. Weiterhin wird davon ausgegangen, dass die WEA-Schalter 15 und der Sammelschienen-Schalter 17 geöffnet und die Windenergieanlagen 11 damit von der zweiten Sammelschiene 162 des WEA-Netzes 16 abgetrennt sind, dass der Maschinenschalter 25 und der Drosselschalter 28 geöffnet sind, und dass die magnetische Erregung H des Maschinengenerators 23 auf den Wert "Null" gesetzt ist.

Nunmehr werden zumindest eine der Windenergieanlagen 11, die beiden Sammelschienen 161, 162 des WEA-Netzes 16, die Drossel/n 27 und der Maschinentransformator 23 im spannungslosen Zustand zusammengeschaltet. Hierzu werden im Einzelnen die folgenden Maßnahmen durchgeführt.

Es wird die zweite Sammelschiene 162 des WEA-Netzes 16 von dem Übertragungsnetz 20 getrennt. Hierzu wird der Hauptschalter 18 geöffnet.

Danach wird zumindest eine der Windenergieanlagen 11 bzw. deren WEA-Generator 13 mit der ersten Sammelschiene 161 des WEA-Netzes 16 verbunden. Hierzu wird/werden der/die zugehörigen WEA-Schalter 15 geschlossen. Voraussetzung ist dabei, dass die Windenergieanlage/n 11 sich nicht in einem Einspeise-Modus, sondern in einem Eigenbedarfs-Modus befindet/befinden, und dass von den/der Windenergieanlage/n 11 noch keine Eigenbedarfsenergie bezogen wird. Diese Voraussetzungen können von den jeweiligen Windenergieanlagen 11 selbst und/oder von einem übergeordneten Leitsystem überprüft und/oder entsprechend eingestellt werden.

Danach wird die erste Sammelschiene 161 mit der zweiten Sammelschiene 162 des WEA-Netzes 16 verbunden. Hierzu wird der Sammelschienen-Schalter 17 geschlossen.

Danach wird/werden die Drossel/n 27 mit der zweiten Sammelschiene 162 des WEA-Netzes 16 verbunden. Hierzu wird der Drosselschalter 28 geschlossen.

Und danach wird der Maschinengenerator 23 mit der zweiten Sammelschiene 162 des WEA-Netzes 16 verbunden. Hierzu wird der Maschinenschalter 25 geschlossen.

Sind mehrere Maschinengeneratoren 23 vorhanden, so wird nur ein einziger dieser Maschinengeneratoren 23 über den zugehörigen Maschinenschalter 25 mit der zweiten Sammelschiene 162 des WEA-Netzes 16 verbunden. Die anderen Maschinengeneratoren 23 werden bei geöffneten zugehörigen Maschinenschaltern 25 hochgefahren und erst danach mit der dann vorhandenen Spannung auf dem WEA-Netz 16 synchronisiert und über die jeweils zugehörigen Maschinenschalter 25 parallelgeschaltet.

Gegebenenfalls bereits während der vorstehend erläuterten Maßnahmen, spätestens aber danach wird die Brennkraftmaschine 22 gestartet. Letzteres hat zur Folge, dass der Maschinengenerator 23 beschleunigt wird und nach kurzer Zeit seine Nenndrehzahl erreicht und dann mit dieser Nenndrehzahl läuft. Die magnetische Erregung H des Maschinengenerators 22 wird dabei nicht verändert und bleibt somit auf dem Wert "Null".

Zum Starten der Brennkraftmaschine 22 und gegebenenfalls auch zu deren Betrieb ist elektrische Energie erforderlich. Diese kann beispielsweise aus nicht-dargestellten Batterien entnommen werden, die auf der zugehörigen Plattform üblicherweise vorhanden sind.

Gegebenenfalls bereits vor dem Erreichen der Nenndrehzahl des Maschinengenerators 22, spätestens aber mit dem Erreichen dieser Nenndrehzahl wird die magnetische Erregung H des Maschinengenerators 23 ausgehend von Null erhöht. In der Figur 2 ist der Beginn der Erhöhung der magnetischen Erregung H als Zeitpunkt t1 gekennzeichnet. Die Erhöhung kann einen linearen Verlauf oder einen treppenförmigen Verlauf oder einen bogenförmigen Verlauf oder einen sonstigen Verlauf aufweisen.

Das Schließen des Maschinenschalters 25 erfolgt dabei gegebenenfalls bereits vor der Erhöhung der magnetischen Erregung H des Maschinengenerators 23, spätestens aber mit dem Beginn dieser Erhöhung.

Die magnetische Erregung H des Maschinengenerators 23 wird bis zu einem Nennwert H* der Erregung erhöht. In der Figur 2 ist dieser Nennwert H* in einem Zeitpunkt t2 erreicht. Die Zeitdauer zwischen dem Zeitpunkt t1 und dem Zeitpunkt t2 kann wenige Sekunden betragen, beispielsweise etwa 10 Sekunden. Nach dem Zeitpunkt t2 wird die magnetische Erregung H im Wesentlichen konstant auf dem Nennwert H* gehalten.

Die Erhöhung der magnetischen Erregung H des Maschinengenerators 23 hat zur Folge, dass sich auch die von dem Maschinengenerator 23 erzeugte Spannung erhöht. Beide Erhöhungen verlaufen dabei nicht sprungförmig. Dies ist gleichbedeutend damit, dass die Spannung auf dem WEA-Netz 16 von dem Maschinengenerator 23 über den Maschinentransformator 24 langsam aufgebaut wird. Der Maschinengenerator 23 übernimmt damit die Lieferung des Eigenbedarfs des Windparks.

Während der Lieferung des Eigenbedarfs durch den Maschinengenerator 23 ist es erforderlich, unterschiedliche Leistungsflüsse innerhalb der elektrischen Schaltung 10 zu berücksichtigen. Diese verschiedenen Leistungsflüsse haben dabei jeweils einen unterschiedlichen statischen und/oder dynamischen Blindleistungsbedarf zur Folge. Die unterschiedlichen Blindleistungen werden mit Hilfe des Maschinengenerators 23 kompensiert bzw. ausgeregelt.

Beispielsweise bei einer großen Remanenz der WEA-Transformatoren 14 kann deren Blindleistungsbedarf erhöht sein. Dies kann dadurch ausgeglichen werden, dass die magnetische Erregung H des Maschinengenerators 23 nur auf einen Wert wenig unterhalb des Nennwerts H* erhöht wird, beispielsweise nur auf 95 % des Nennwerts H* der magnetischen Erregung H.

Wenn die Lieferung des Eigenbedarfs durch den Maschinengenerator 23 nicht mehr erforderlich ist, weil zum Beispiel wieder eine Energieversorgung von dem Land-Netz über das Übertragungsnetz 20 zu dem WEA-Netz 16 vorhanden ist oder weil eine oder mehrere der Windenergieanlagen 11 wieder eingeschaltet ist/sind, so wird die magnetische Erregung H des Maschinengenerators 23 im Wesentlichen sprungförmig wieder abgeschaltet. In der Figur 2 erfolgt dieses Abschalten in einem Zeitpunkt t3.

Durch die erläuterte Vorgehensweise für den Aufbau der Eigenbedarfsspannung, insbesondere durch das nicht-sprungförmige Erhöhen der magnetischen Erregung H des Maschinentransformators 23, können Schalthandlungen vermieden werden, die mit Lastsprüngen verbunden wären, die ihrerseits zu Instabilitäten der Eigenbedarfsversorgung und/oder des WEA-Netzes 16 führen könnten. Beispielsweise kann durch die erläuterte Vorgehensweise das Zuschalten von einzelnen Windenergieanlagen 11 vermieden werden, das an sich im ersten Moment zu einem kurzschlussartigen Lastsprung führen würde, der unter Umständen den Aufbau einer Spannung auf dem WEA-Netz 16 verhindern oder eine aufgebaute Spannung auf dem WEA-Netz 16 wieder zusammenbrechen lassen würde. Entsprechendes gilt für das Zuschalten des Generatortransformators 23. Weiterhin wäre es zur Beherrschung derartiger Schalthandlungen erforderlich, die Leistung der Brennkraftmaschine 22 und des Generatortransformators 23 zu erhöhen, was somit bei der erläuterten Vorgehensweise, insbesondere durch das nicht-sprungförmige Erhöhen der magnetischen Erregung H des Maschinentransformators 23, nicht erforderlich ist.

## Patentansprüche

1. Verfahren zum Betreiben einer elektrischen Schaltung (10) für einen Windpark, wobei die elektrische Schaltung (10) ein erstes Netz (16) aufweist, mit dem mindestens ein von einer Windenergieanlage (11) angetriebener WEA-Generator (13) gekoppelt ist, und mit dem mindestens ein von einer Brennkraftmaschine (22) angetriebener Maschinengenerator (23) gekoppelt ist, **dadurch gekennzeichnet, dass**, wenn der WEA-Generator (13) im Wesentlichen keine elektrische Energie liefert, die magnetische Erregung (H) des laufenden Maschinengenerators (23) ausgehend von Null erhöht wird.

2. Verfahren nach Anspruch 1, wobei die Erhöhung im Wesentlichen linear ausgeführt wird, insbesondere über eine Zeitdauer von wenigen Sekunden.

3. Verfahren nach einem der Ansprüche 1 oder 2, wobei die magnetische Erregung (H) bis zu einem Wert wenig unterhalb des Nennwerts (H*) der magnetischen Erregung (H) oder bis auf den Nennwert (H*) der magnetischen Erregung (H) erhöht wird.

4. Verfahren nach einem der Ansprüche 1 bis 3, wobei vor der Erhöhung der magnetischen Erregung (H) das WEA-Netz (16), der WEA-Generator (13) und der Maschinengenerator (23) in einem spannungslosen Zustand zusammengeschaltet werden.

5. Verfahren nach einem der Ansprüche 1 bis 4, wobei die erhöhte magnetische Erregung (H) des Maschinengenerators (23) im Wesentlichen sprungförmig abgeschaltet wird.

6. Elektrische Schaltung (10) für einen Windpark, wobei die elektrische Schaltung (10) ein erstes Netz (16) aufweist, mit dem mindestens ein von einer Windenergieanlage (11) angetriebener WEA-Generator (13) gekoppelt ist, und mit dem mindestens ein von einer Brennkraftmaschine (22) angetriebener Maschinengenerator (23) gekoppelt ist, **dadurch gekennzeichnet, dass**, wenn der WEA-Generator (13) im Wesentlichen keine elektrische Energie liefert, die magnetische Erregung (H) des laufenden Maschinengenerators (23) ausgehend von Null erhöht werden kann.

7. Elektrische Schaltung (10) nach Anspruch 6, wobei die Erhöhung im Wesentlichen linear ausgeführt werden kann, insbesondere über eine Zeitdauer von wenigen Sekunden.

8. Elektrische Schaltung (10) nach einem der Ansprüche 6 oder 7, wobei die magnetische Erregung (H) bis zu einem Wert wenig unterhalb des Nennwerts (H*) der magnetischen Erregung (H) oder bis auf den Nennwert (H*) der magnetischen Erregung (H) erhöht werden kann.

9. Elektrische Schaltung (10) nach einem der Ansprüche 6 bis 8, wobei vor der Erhöhung der magnetischen Erregung (H) das WEA-Netz (16), der WEA-Generator (13) und der Maschinengenerator (23) in einem spannungslosen Zustand zusammengeschaltet werden können.

10. Elektrische Schaltung (10) nach einem der Ansprüche 6 bis 9, wobei die erhöhte magnetische Erregung (H) des Maschinengenerators (23) im Wesentlichen sprungförmig abgeschaltet werden kann.

11. Elektrische Schaltung (10) nach einem der Ansprüche 6 bis 10, wobei das erste Netz (16) über ein zweites Netz (20) mit einem Energieversorgungsnetz gekoppelt ist, und wobei, wenn das zweite Netz (20) unterbrochen ist und der WEA-Generator (13) im Wesentlichen keine elektrische Energie liefert, die magnetische Erregung (H) des Maschinengenerators (23) ausgehend von Null erhöht werden kann.

12. Elektrische Schaltung (10) nach einem der Ansprüche 6 bis 11, wobei der Maschinengenerator (23) über einen Maschinenschalter (25) mit dem ersten Netz (16) gekoppelt ist, und wobei spätestens mit dem Beginn der Erhöhung der magnetischen Erregung (H) der Maschinenschalter (25) geschlossen werden kann.
